# FASCICULE DE BREVET EUROPEEN

(11) **EP 2 852 803 B1**
(45) Date de publication et mention de la délivrance du brevet: **28.08.2019**
(21) Numéro de dépôt: 13723157.7
(22) Date de dépôt: 16.05.2013
(51) Int. Cl.: F28D 1/03, F28F 19/00, F28F 13/06

(54) **TUBE D'ÉCHANGEUR DE CHALEUR, FAISCEAU DE TUBE D'ÉCHANGEUR DE CHALEUR ET ÉCHANGEUR DE CHALEUR COMPRENANT UN TEL FAISCEAU**
WÄRMETAUSCHERROHR, WÄRMETAUSCHERROHRBÜNDEL UND WÄRMETAUSCHER MIT DERARTIGEM BÜNDEL
HEAT EXCHANGER TUBE, HEAT EXCHANGER TUBE BUNDLE AND HEAT EXCHANGER COMPRISING SUCH A BUNDLE

(30) Priorité: 22.05.2012 FR 1254670
(43) Date de publication de la demande: 01.04.2015
(73) Titulaire: Valeo Systemes Thermiques, 78320 Le Mesnil-Saint-Denis (FR)
(72) Inventeur: MOREAU, Sylvain, F-72700 Spay (FR); BUSSON, François, F-72220 Saint Gervais En Belin (FR); IBRAHIMI, Mohamed, F-72700 Allonnes (FR); PHILIPPE, Maryse, F-72210 La Suze Sur Sarthe (FR)
(74) Mandataire: Metz, Gaëlle
(86) Numéro de dépôt international: PCT/EP2013/060209
(87) Numéro de publication internationale: WO 2013/174730

(56) Documents cités:
- EP-A1- 2 105 694
- EP-A2- 1 455 154
- EP-A2- 2 293 003
- FR-A1- 2 192 282
- JP-U- 60 173 871
- US-A1- 2003 141 046
- US-A1- 2004 134 645

## Description

L'invention est du domaine des échangeurs de chaleur, par exemple les échangeurs de chaleur de véhicule automobile, notamment situés dans une installation de ventilation, chauffage et/ou climatisation d'un véhicule automobile. Les échangeurs de chaleur concernés correspondent, dans une application préférentielle, aux évaporateurs prévus sur les boucles ou circuits de climatisation des véhicules. Cependant, d'autres applications de ces échangeurs chaleur sont également envisageables sans sortir du cadre de l'invention.

Il est connu des évaporateurs comprenant un faisceau de tubes. Un premier fluide circule à l'intérieur de chaque tube depuis une entrée vers une sortie du faisceau et échange de la chaleur avec un deuxième fluide, par exemple un flux d'air, qui balaye les tubes en traversant le faisceau depuis une face d'entrée du faisceau jusqu'à une face de sortie du faisceau.

Les tubes comprennent une plaque inférieure et une plaque supérieure munie chacune d'un fond et d'un bord. Elles sont reliées entre elles au niveau de leurs bords afin de former un volume interne du tube destiné à recevoir le premier fluide. Dans un tel échangeur de chaleur, le deuxième fluide entre en contact avec les tubes en venant frapper une tranche résultant de la solidarisation des deux bords.

Le document US2004206481A présente un évaporateur comprenant au moins un noyau. Le noyau a des tubes et une paire de réservoirs. Le tube est configuré pour faire passer le liquide de refroidissement à l'intérieur, chacun des tubes étant formé en pliant un matériau de plaque et en reliant les deux bords du matériau de plaque plié l'un à l'autre. La paire de réservoirs collecteurs est reliée à chaque extrémité ouverte des tubes et communique avec elle. Dans le noyau le plus au vent, le bord articulé des tubes est disposé du côté au vent.

Le document FR2192282 A1 décrit un échangeur de chaleur comprenant un réseau de canaux parallèles formés et délimités par de minces parois conductrices de chaleur, dont au moins une paroi présente sur au moins une partie de sa surface des contours isostressés avec des saillies de support de paroi unidirectionnelles disposées sensiblement uniformes formées par la paroi. Les saillies sont disposées de manière à s'accoupler avec les saillies correspondantes d'une paroi isostatique adjacente similaire. Les parois, ainsi disposées, sont scellées aux bords des parois de manière à former et à isoler des canaux fermés alternatifs des canaux ouverts intermédiaires de sorte que les canaux alternatifs puissent contenir et conduire un premier fluide, et que les canaux intermédiaires puissent contenir et conduire un second fluide à une température différente, ce qui entraîne un échange thermique entre les fluides.

Le document EP 1 455 154 A2 décrit un tube selon le préambule de la revendication 1.

Le flux d'air traversant le faisceau peut comprendre des impuretés qui favorisent une accélération d'un phénomène de corrosion. A titre d'exemple, de telles impuretés peuvent être des particules de cuivre provenant du moteur du groupe moto-ventilateur qui est utilisé pour le refroidissement forcé de l'échangeur de chaleur. Or, le bord des plaques contre lequel le flux d'air arrive en contact des tubes est une zone sensible, notamment à la corrosion, en particulier du fait de son inclinaison par rapport à la direction du flux d'air qui balaye le faisceau. Il en résulte une détérioration rapide de cette zone des tubes qui peut engendrer des fissures et des fuites par lesquels le premier fluide circulant à l'intérieur des tubes peut s'échapper.

L'invention vise à améliorer la situation.

Elle propose pour cela un tube d'échangeur de chaleur destiné à permettre un échange de chaleur entre un premier fluide et un deuxième fluide circulant au contact du tube, ledit tube comprenant une plaque supérieure et une plaque inférieure disposée en vis-à-vis et définissant un volume interne du tube dans lequel le premier fluide est apte à circuler, chacune des plaques comprenant un fond et au moins un bord, lesdites plaques étant au contact entre elles au niveau dudit bord, ledit tube comprenant un écran de déviation solidaire du bord, l'écran de déviation comprenant une première paroi s'étendant transversalement aux fonds et agencée pour dévier le deuxième fluide vers lesdits fonds. Selon l'invention, l'écran de déviation comprend une deuxième paroi liée et s'étendant transversalement à la première paroi, et une troisième paroi liée et s'étendant transversalement à la deuxième paroi d'une part, et audit bord d'autre part.

Ainsi, l'invention permet, notamment grâce à l'écran de déviation, de diriger le flux du deuxième fluide vers les fonds des plaques, c'est-à-dire de diriger le flux du deuxième fluide de sorte qu'il ne vienne pas frapper de manière frontale les bords. Le débit du deuxième fluide entrant en contact avec la zone sensible à la corrosion se situant au niveau des bords est donc fortement diminué. Le deuxième fluide peut ainsi s'écouler le long des fonds des plaques, dans une direction sensiblement parallèle à l'extension de ces plaques.

La première paroi s'étend, par exemple, perpendiculairement aux fonds desdites plaques.

Selon l'invention, ledit bord et ledit fond s'étendent dans des plans distincts. Le bord est, notamment, surélevé par rapport au fond.

Selon l'invention, le fond de chaque plaque comprend une face dirigée vers l'extérieur du tube, dite face externe, une hauteur du tube étant définie entre les faces externes des plaques inférieure et supérieure selon un axe, dit premier axe, perpendiculaire aux fonds, la première paroi s'étendant selon le premier axe sur une distance comprise entre la hauteur du tube et la hauteur du tube diminuée de 0,4 mm. La première paroi est ainsi moins haute que le tube et ne dépasse pas ni la face externe de la plaque inférieure ni la face externe de la plaque supérieure selon le premier axe. Cette moindre hauteur de l'écran de déviation par rapport au reste du tube permet d'éviter une génération d'interférences mécaniques entre l'écran de déviation et des intercalaires positionnés entre deux tubes adjacents lors du pré-assemblage d'un faisceau de tubes.

Selon l'invention, la première paroi comprend une première extrémité située à une distance strictement inférieure à 0,2 mm de la face externe de la plaque inférieure selon le premier axe. Selon l'invention, la première paroi comprend une deuxième extrémité située à une distance strictement inférieure à 0,2 mm de la face externe de la plaque supérieure selon le premier axe. L'écran de déviation protège ainsi le bord du tube du deuxième fluide sur une hauteur suffisamment importante pour que la vélocité du deuxième fluide évite le bord du tube.

Avantageusement, l'écran de déviation est centré par rapport au tube selon la hauteur dudit tube. Le deuxième fluide est alors dirigé de façon similaire vers le fond de la plaque supérieure et vers le fond de la plaque inférieure.

Selon un exemple de réalisation de l'invention, l'écran de déviation est disposé sur la plaque inférieure.

Selon un aspect de l'invention, l'écran de déviation est disposé le long d'un coté longitudinal du tube destiné à recevoir le deuxième fluide. On comprend ici que l'écran de déviation est disposé du coté du tube apte à être en premier en contact avec le deuxième fluide, c'est-à-dire le coté tube destiné à recevoir en premier le deuxième fluide. Autrement dit, le deuxième fluide est destiné à entrer en contact avec le tube au niveau de l'écran de déviation.

Avantageusement, l'écran de déviation vient de matière avec la plaque inférieure ou la plaque supérieure. L'écran de déviation peut venir de matière avec la plaque inférieure et la plaque supérieure.

De manière alternative, l'écran de déviation est rapporté audit tube.

L'invention concerne aussi un faisceau d'échangeur de chaleur comprenant au moins un tube tel que décrit précédemment. Le faisceau comprend, notamment, une pluralité de tubes tels que décrits précédemment.

L'invention concerne également un échangeur de chaleur comprenant un faisceau tel que décrit précédemment.

Selon un aspect de l'invention, le faisceau comprend une face d'entrée du deuxième fluide dans le faisceau, l'écran de déviation du tube étant disposés du coté de ladite face d'entrée du faisceau, notamment dans le plan dans lequel s'inscrit la face d'entrée. C'est, par exemple, tout ou partie des tubes de la pluralité de tubes du faisceau qui comprennent un écran de déviation. Ces écrans de déviations sont, notamment, disposés du coté de ladite face d'entrée du faisceau.

Un exemple de procédé de fabrication d'une plaque inférieure d'un tube d'échangeur de chaleur est décrit. Selon ce procédé:
- on emboutit un feuillard métallique plan afin de générer la plaque inférieure comprenant un bord qui entoure un fond et une extrémité distale adjacente au bord, et
- on plie l'extrémité distale afin de former un écran de déviation s'étendant transversalement au fond.

Les figures annexées feront bien comprendre comment l'invention peut être réalisée. Sur ces figures, des références identiques désignent des éléments semblables.
La figure 1 est une vue en perspective d'un exemple de réalisation d'un échangeur de chaleur comprenant un faisceau de tubes conformes à l'invention.
La figure 2 est une coupe transversale du faisceau de tubes selon la ligne II-II de la figure 1.
La figure 3 est une vue similaire à la figure 2, représentant de manière plus détaillée un tube conforme à l'invention du faisceau.
La figure 4 représente un procédé d'emboutissage d'une plaque d'un tube conforme à l'invention.
La figure 5 représente un procédé d'emboutissage d'une variante d'une plaque d'un tube conforme à l'invention.

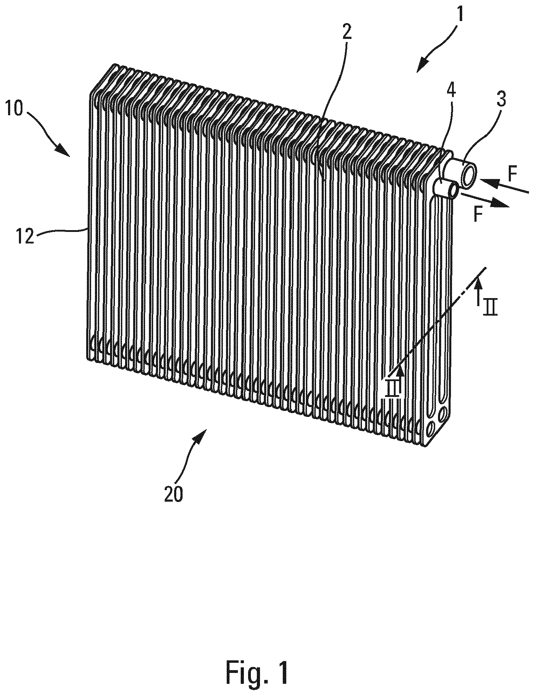

L'invention trouve son application, par exemple, dans un échangeur de chaleur tel que représenté sur la figure 1. Cet échangeur de chaleur est destiné, notamment, à être situé dans une installation de ventilation, chauffage et/ou climatisation d'un véhicule automobile. Un tel échangeur de chaleur 1 est, par exemple un évaporateur d'une boucle de climatisation de l'habitacle d'un véhicule automobile.

L'échangeur de chaleur 1 peut comprendre un faisceau 10 de tubes parallèles 2. Un tel échangeur de chaleur 1 comprend des tubulures, respectivement d'entrée 3 et de sortie 4, selon le sens de circulation F d'un premier fluide, notamment un fluide frigorigène, circulant dans les tubes 2. Le premier fluide circule alors dans les tubes 2 de l'échangeur de chaleur 1 en effectuant une boucle de circulation depuis la tubulure d'entrée 3 jusqu'à la tubulure de sortie 4. Un deuxième fluide balaye le faisceau 10 depuis une face d'entrée 11 du faisceau 10 jusqu'à une face de sortie (non visible) du faisceau 10. Ce deuxième fluide est notamment de l'air extérieur destiné à être envoyé dans un habitacle du véhicule en vue de conditionner thermiquement ce dernier. Il balaye le faisceau en passant entre les tubes 2 selon une direction sensiblement perpendiculaire au sens de circulation du premier fluide.

Les tubes 2 sont ainsi destinés à permettre un échange de chaleur entre le premier et le deuxième fluides circulant au contact du tube 2.

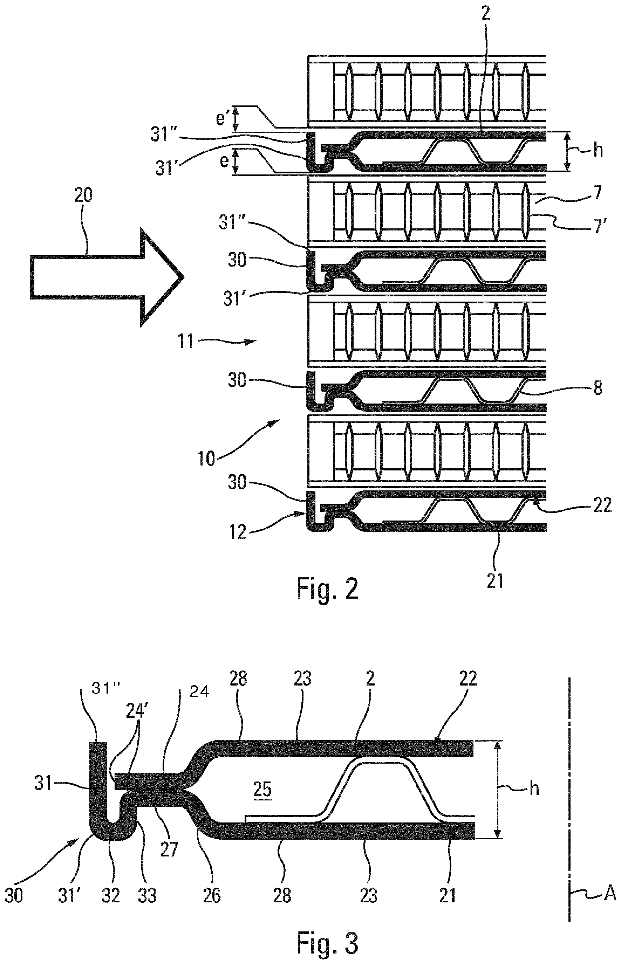

Une partie du faisceau 10 de tubes 2 est représenté sur la figure 2 et un des tubes 2 du faisceau 10 selon l'invention est représenté de manière plus détaillée sur la figure 3. La description ci-dessous concerne ces deux figures.

Sur ces figures un seul coté du faisceau est représenté, c'est-à-dire ici la face d'entrée 11 du faisceau 10. La flèche référencée 20, illustre la direction du flux du deuxième fluide.

Le faisceau 10 comprend ainsi un empilement de tubes 2, installés ici de manière parallèle. Chaque tube 2 comprend une plaque inférieure 21 et une plaque supérieure 22 situées en vis-à-vis l'une de l'autre afin de définir un volume interne 25 dans lequel le premier fluide circule. Les tubes 2 ont une section transversale aplatie et entre ceux-ci sont agencés des intercalaires 7 augmentant la surface d'échange thermique entre le premier fluide et le deuxième fluide. Les intercalaires 7 sont, par exemple, munis de persiennes 7' afin de dévier le flux du deuxième fluide dans le but d'augmenter l'échange de chaleur avec le premier fluide. L'intérieur des tubes 2 peut aussi inclure des perturbateurs 8 qui, à l'instar des intercalaires 7, augmentent la surface d'échange thermique et la tenue mécanique des tubes 2. Chaque tube 2 définit, par exemple, une pluralité de canaux internes, parallèles, de circulation du premier fluide.

Les différents éléments évoqués précédemment que comprend l'échangeur de chaleur 1 sont, notamment, brasés les uns aux autres.

Chacune des plaques 21, 22 comprend un fond 23, sensiblement plat et entouré d'un bord 24. C'est au niveau de leurs bords 24 que les plaques 21, 22 sont assemblées entre elles, notamment par brasage. Le bord 24 comprend une première partie 26, par exemple inclinée à 45° dans le sens horaire par rapport au fond 23 et reliée à celui-ci, ainsi qu'une deuxième partie 27 inclinée à 45° dans le sens antihoraire par rapport à la première partie 26, c'est-à-dire que la deuxième partie s'étend sensiblement parallèlement au fond 23. C'est au niveau de leur deuxième partie 27 que les plaques sont assemblées ensemble, notamment par brasage. Les bords 24 se finissent par une extrémité 24'.

Selon l'invention, le tube comprend un écran de déviation 30 solidaire du bord 24, l'écran de déviation 30 comprenant une première paroi 31 s'étendant transversalement aux fonds 23 et agencée pour dévier le deuxième fluide vers les fonds 23.

L'écran de déviation 30 peut être rapporté au tube 2 ou, comme illustré sur les figures 2 et 3, venir de matière avec le tube 2, notamment dans le prolongement du bord 24.

La première paroi 31 de l'écran de déviation 30 s'étend ici perpendiculairement aux fonds 23. Elle comprend une première extrémité 31' située du coté de la plaque inférieure 21 et une deuxième extrémité 31" située du coté de la plaque supérieure 22.

L'écran de déviation 30 comprend une deuxième paroi 32 liée à la première paroi 31 au niveau de la première extrémité 31'. La deuxième paroi 32 s'étend transversalement à la première paroi 31, et notamment perpendiculairement à la première paroi 31, c'est-à-dire ici parallèlement aux fonds 23. L'écran de déviation 30 comprend une troisième paroi 33 liée à la deuxième paroi 32. La troisième paroi 33 s'étend transversalement à la deuxième paroi 32 et notamment perpendiculairement à la deuxième paroi 32. La troisième paroi 33 est liée d'une part à la deuxième paroi 32 et d'autre part au bord 24, et notamment à l'extrémité 24' du bord 24.

Dans l'exemple illustré, l'écran de déviation 30 est issu de la plaque inférieure 21. C'est en particulier la troisième paroi 33 qui est issu de matière avec le bord 24 de la plaque inférieure. La première paroi 31 est ici séparée du bord 24 de la plaque supérieure 22. L'écran de déviation 30 pourrait également être disposé seulement sur la plaque supérieure 22 ou sur les plaques inférieure et supérieure 21, 22.

Le fond 23 de chaque plaque 21, 22 comprend une face 28 dirigée vers l'extérieur du tube 2, dite face externe 28 qui est en contact avec le deuxième fluide. On définit la hauteur h du tube 2 comme étant la distance entre les faces externes 28 des plaques inférieure 21 et supérieure 22 selon un axe, dit premier axe A, perpendiculaire aux fonds 23. La première paroi 31 s'étend selon le premier axe A sur une distance comprise entre la hauteur h du tube et la hauteur h du tube moins 0,4 mm. On comprend ici que la première paroi 31 ne dépasse pas les faces externes 28 des fonds 23 des plaques inférieure 21 et supérieure 22 selon le premier axe A.

La première paroi 31 est ici centrée par rapport au tube 2. Autrement dit, la première paroi 31 est centrée par rapport à un plan médian du tube 2 passant par la brasure entre le bord 24 de chaque plaque, la plaque inférieure 21 s'étendant d'un premier coté du plan médian et la plaque supérieure 22 s'étendant d'un deuxième coté du plan médian.

Ainsi, la première extrémité 31' de la première paroi 31 est située à une distance strictement inférieure à 0,2 mm de la face externe 28 de la plaque inférieure selon le premier axe A. De préférence, la distance entre la première extrémité 31' et la face externe 28 de la plaque inférieure selon le premier axe A est de 0,1 mm. De la même manière, la première paroi la deuxième extrémité 31" est située à une distance strictement inférieure à 0,2 mm de la face externe 28 de la plaque supérieure 22 selon le premier axe A. De préférence, la distance entre la deuxième extrémité 31" et la face externe 28 de la plaque supérieure selon le premier axe A est de 0,1 mm.

Il y a donc un jeu e entre la première extrémité 31' et la face externe 28 de la plaque inférieure selon le premier axe et/ou un jeu e' entre la deuxième extrémité 31" et la face externe 28 de la plaque supérieure 22. Ce ou ces jeux e, e' permettent, notamment, lors de l'assemblage de l'échangeur de chaleur, d'éviter les interférences mécaniques entre les intercalaires et l'écran de déviation 30.

L'écran de déviation 30 des tubes est disposé du coté de la face d'entrée 11 du faisceau 10. Il est ainsi disposé sur un coté longitudinal 12 des tubes destinés à recevoir le deuxième fluide lorsqu'il entre dans le faisceau 10. Il peut ainsi dévier le flux du deuxième fluide lorsque ce dernier pénètre dans le faisceau 10. Comme expliqué précédemment, un seul coté du faisceau 10 est représenté sur la figure 2, l'autre coté, correspondant à la face de sortie du faisceau étant symétrique au coté représenté, à l'exception du fait qu'il ne comprend pas l'écran de déviation 30.

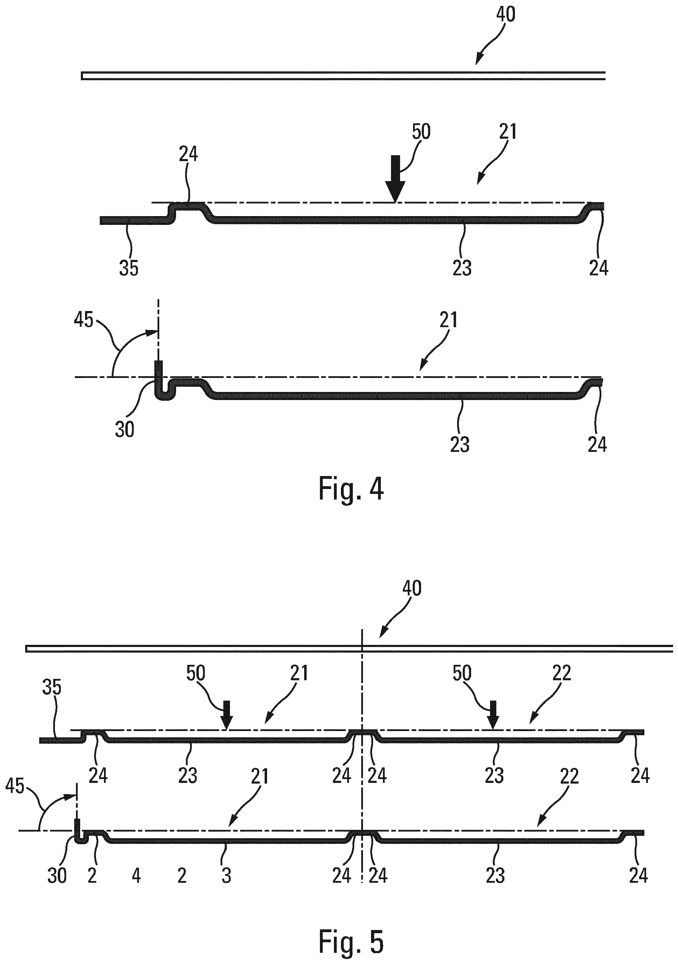

Les figures 4 et 5 représentent un procédé de fabrication d'une plaque inférieure d'un tube selon l'invention destinée à être installée dans un faisceau d'échange d'un échangeur de chaleur selon l'invention.

Selon ce procédé :
- on part d'un feuillard métallique plan 40
- on emboutit ce feuillard métallique plan 40 selon la flèche référencée 50 afin de générer la plaque inférieure 21 comprenant un bord 24 qui entoure un fond 23 et une extrémité distale 35 adjacente au bord 24. L'extrémité distale peut être présente sur un seul coté de la plaque inférieure 21. Le fond 23 et l'extrémité distale 35 s'étendent alors sensiblement dans un même plan alors que le bord 24 est surélevé par rapport au fond 23 et à l'extrémité distale 35.
- on plie l'extrémité distale 35 en suivant la flèche référencée 45 de manière à former l'écran 30 de déviation s'étendant transversalement au fond 23.

On fabrique ainsi une plaque inférieure 21 destinée à être assemblé avec une plaque supérieure 22 comprenant un fond 23 et un bord 24 similaire, de sorte qu'elles forment entre elles le tube 2 muni de l'écran de déviation 30 tel que défini précédemment.

La figure 5 représente un procédé de fabrication d'un tube selon l'invention dans lequel on emboutit de manière simultanée la plaque inférieure 21 comprenant l'extrémité distale 35 et la plaque supérieure 22 ne comprenant pas l'extrémité distale 35, c'est-à-dire la plaque supérieure 22 ne comprenant pas l'écran de déviation 30. Ces plaques inférieure et supérieure 21, 22 peuvent alors être disposées l'une à coté de l'autre et faire partie du même feuillard métallique 40. Finalement, on forme simultanément une plaque inférieure 21 et une plaque supérieure 22 à partir d'un même feuillard métallique 40.

On plie ensuite l'extrémité distale 35 de la plaque inférieure 21 comme expliqué précédemment afin de former l'écran de déviation 30. On coupe alors le feuillard métallique 40 afin de séparer la plaque inférieure 21 comprenant l'écran de déviation 30 de la plaque supérieure 22 ne comprenant pas l'écran de déviation 30. En variante, on plie la plaque supérieure à 180° de manière à approcher le bord 24 de la plaque supérieure 22 au bord 24 de la plaque inférieure 21.

Selon un autre aspect, le procédé peut prévoir une étape d'assemblage de l'une des plaques 21, 22 sur l'autre afin de les disposer en vis-à-vis de sorte qu'elles forment le tube 2 tel que décrit précédemment.

## Revendications

1. Tube (2) d'échangeur de chaleur (1) destiné à permettre un échange de chaleur entre un premier fluide et un deuxième fluide circulant au contact du tube (2), ledit tube (2) comprenant une plaque supérieure (22) et une plaque inférieure (21) disposée en vis-à-vis et définissant un volume interne (25) du tube (2) dans lequel le premier fluide est apte à circuler, chacune des plaques (21, 22) comprenant un fond (23) et au moins un bord (24), ledit au moins un bord (24) et ledit fond (23) s'étendent dans des plans distincts, lesdites plaques (21, 22) étant au contact entre elles au niveau dudit bord (24), ledit tube (2) comprenant un écran de déviation (30) solidaire du bord (24), l'écran de déviation (30) comprenant une première paroi (31) s'étendant transversalement aux fonds (23) et agencée pour dévier le deuxième fluide vers lesdits fonds (23), **caractérisé en ce que** l'écran de déviation (30) comprend une deuxième paroi (32) liée et s'étendant transversalement à la première paroi (31), et une troisième paroi (33) liée et s'étendant transversalement à la deuxième paroi (32) d'une part, et au bord (24) d'autre part, dans lequel le fond (23) de chaque plaque (21, 22) comprend une face (28) dirigée vers l'extérieur du tube (2), dite face externe (28), une hauteur (h) du tube (2) étant définie entre les faces externes (28) des plaques inférieure (21) et supérieure (22) selon un axe, dit premier axe (A), perpendiculaire aux fonds (23), la première paroi (31) s'étendant selon le premier axe (A) sur une distance comprise entre la hauteur (h) du tube (2) et la hauteur (h) du tube (2) diminué de 0,4 mm, dans lequel la première paroi (31) comprend une première extrémité (31') située à une distance strictement inférieure à 0,2 mm de la face externe (28) de la plaque inférieure (21) selon le premier axe (A), dans lequel la première paroi (31) comprend une deuxième extrémité (31") située à une distance strictement inférieure à 0,2 mm de la face externe (28) de la plaque supérieure (22) selon le premier axe (A).

2. Tube (2) selon la revendication 1, dans lequel la première paroi (31) est centrée par rapport au tube (2) selon la hauteur (h) dudit tube (2).

3. Tube (2) selon l'une quelconque des revendications précédentes, dans lequel l'écran de déviation (30) est disposé le long d'un coté longitudinal (12) du tube (2) apte à être en premier en contact avec le deuxième fluide.

4. Tube (2) selon l'une quelconque des revendications précédentes, dans lequel l'écran de déviation (30) vient de matière avec la plaque inférieure (21) ou la plaque supérieure (22).

5. Faisceau (10) d'échangeur de chaleur (1) comprenant au moins un tube (2) selon l'une quelconque des revendications 1 à 4.

6. Échangeur de chaleur (1) comprenant un faisceau (10) selon la revendication 5.

7. Échangeur (1) selon la revendication 6, dans lequel le faisceau (10) comprend une face d'entrée (11) du deuxième fluide dans le faisceau (10), l'écran de déviation (30) du tube (2) étant disposé du coté de ladite face d'entrée (11) du faisceau (10).

## Patentansprüche

1. Rohr (2) eines Wärmetauschers (1), der dazu bestimmt ist, einen Wärmeaustausch zwischen einem ersten Fluid und einem zweiten Fluid zu erlauben, die in Kontakt mit dem Rohr (2) fließen, wobei das Rohr (2) eine obere Platte (22) und eine untere Platte (21) enthält, die einander gegenüber angeordnet sind und ein Innenvolumen (25) des Rohrs (2) definieren, in dem das erste Fluid fließen kann, wobei jede der Platten (21, 22) einen Boden (23) und mindestens einen Rand (24) enthält, wobei der mindestens eine Rand (24) und der Boden (23) sich in unterschiedlichen Ebenen erstrecken, wobei die Platten (21, 22) im Bereich des Rands (24) miteinander in Kontakt sind, wobei das Rohr (2) einen fest mit dem Rand (24) verbundenen Umlenkschirm (30) enthält, wobei der Umlenkschirm (30) eine erste Wand (31) enthält, die sich quer zu den Böden (23) erstreckt und eingerichtet ist, um das zweite Fluid zu den Böden (23) umzulenken,
**dadurch gekennzeichnet, dass** der Umlenkschirm (30) eine zweite Wand (32), die mit der ersten Wand (31) verbunden ist und sich quer dazu erstreckt, und eine dritte Wand (33) enthält, die mit der zweiten Wand (32) einerseits und dem Rand (24) andererseits verbunden ist und sich quer dazu erstreckt, wobei der Boden (23) jeder Platte (21, 22) eine zur Außenseite des Rohrs (2) gerichtete Seite (28) enthält, Außenseite (28) genannt, wobei eine Höhe (h) des Rohrs (2) zwischen den Außenseiten (28) der unteren (21) und oberen Platten (22) gemäß einer Achse, erste Achse (A) genannt, lotrecht zu den Böden (23) definiert ist, wobei die erste Wand (31) sich gemäß der ersten Achse (A) über einen Abstand zwischen der Höhe (h) des Rohrs (2) und der Höhe (h) des Rohrs (2) verringert um 0,4 mm erstreckt, wobei die erste Wand (31) ein erstes Ende (31') enthält, das sich in einem Abstand strikt geringer als 0,2 mm von der Außenseite (28) der unteren Platte (21) gemäß der ersten Achse (A) befindet, wobei die erste Wand (31) ein zweites Ende (31") enthält, das sich in einem Abstand strikt geringer als 0,2 mm von der Außenseite (28) der oberen Platte (22) gemäß der ersten Achse (A) befindet.

2. Rohr (2) nach Anspruch 1, wobei die erste Wand (31) bezüglich des Rohrs (2) gemäß der Höhe (h) des Rohrs (2) zentriert ist.

3. Rohr (2) nach einem der vorhergehenden Ansprüche, wobei der Umlenkschirm (30) entlang einer Längsseite (12) des Rohrs (2) angeordnet ist, die als erste mit dem zweiten Fluid in Kontakt sein kann.

4. Rohr (2) nach einem der vorhergehenden Ansprüche, wobei der Umlenkschirm (30) aus dem gleichen Material wie die untere Platte (21) oder die obere Platte (22) hergestellt ist.

5. Bündel (10) eines Wärmetauschers (1), das mindestens ein Rohr (2) nach einem der Ansprüche 1 bis 4 enthält.

6. Wärmetauscher (1), der ein Bündel (10) nach Anspruch 5 enthält.

7. Tauscher (1) nach Anspruch 6, wobei das Bündel (10) eine Eingangsseite (11) des zweiten Fluids in das Bündel (10) enthält, wobei der Umlenkschirm (30) des Rohrs (2) auf der Seite der Eingangsseite (11) des Bündels (10) angeordnet ist.

## Claims

1. Tube (2) of a heat exchanger (1) intended to allow an exchange of heat between a first fluid and a second fluid circulating in contact with the tube (2), the said tube (2) comprising an upper plate (22) and a lower plate (21) arranged opposite and defining an internal volume (25) of the tube (2) in which the first fluid is able to circulate, each of the plates (21, 22) comprising a bottom (23) and at least one edge (24), the said at least one edge (24) of the said bottom (23) extending in distinct planes, the said plates (21, 22) being in contact with one another at the said edge (24), the said tube (2) comprising a deflection screen (30) secured to the edge (24), the deflection screen (30) comprising a first wall (31) extending transversely to the bottoms (23) and designed to deflect the second fluid towards the said bottoms (23),
**characterized in that** the deflection screen (30) comprises a second wall (32) connecting and extending transversely to the first wall (31), and a third wall (33) connected and extending transversely to the second wall (32) on the one hand, and the edge (24) on the other, in which the bottom (23) of each plate (21, 22) comprises a face (28) facing towards the outside of the tube (2) and referred to as an external face (28), a height (h) of the tube (2) being defined between the external faces (28) of the lower (21) and upper (22) plates along an axis, referred to as the first axis (A), perpendicular to the bottoms (23), the first wall (31) extending along the first axis (A) over a distance comprised between the height (h) of the tube (2) and the height (h) of the tube (2) reduced by 0.4 mm, in which the first wall (31) comprises a first end (31') situated at a distance strictly smaller than 0.2 mm from the external face (28) of the lower plate (21) along the first axis (A), in which the first wall (31) comprises a second end (32") situated at a distance strictly less than 0.2 mm from the external face (28) of the upper plate (22) along the first axis (A).

2. Tube (2) according to Claim 1, in which the first wall (31) is centred with respect to the tube (2) along the height (h) of the said tube (2).

3. Tube (2) according to either one of the preceding claims, in which the deflection screen (30) is positioned along a longitudinal side (12) of the tube (2) able to be first in contact with the second fluid.

4. Tube (2) according to any one of the preceding claims, in which the deflection screen (30) is formed as one material with the lower plate (21) or the upper plate (22) .

5. Core bundle (10) of a heat exchanger (1) comprising at least one tube (2) according to any one of Claims 1 to 4.

6. Heat exchanger (1) comprising a core bundle (10) according to Claim 5.

7. Exchanger (1) according to Claim 6, in which the core bundle (10) comprises an inlet face (11) for letting the second fluid into the core bundle (10), the deflection screen (30) of the tube (2) being positioned on the side of the said inlet face (11) of the core bundle (10) .
